# EUROPEAN PATENT APPLICATION

(11) **EP 2 508 552 A1**
(43) Date of publication of application: **10.10.2012**
(21) Application number: 10832844.4
(22) Date of filing: 25.11.2010
(51) Int. Cl.: C08J 5/04

(54) **CARBON FIBER REINFORCED COMPOSITE MATERIALS**

(30) Priority: 30.11.2009 JP 2009272174
(71) Applicant: Kaneka Corporation, Osaka-shi, Osaka 530-8288 (JP)
(72) Inventor: MIYAUCHI, Masahiko, Settsu-shi Osaka 566-0072 (JP); IWAHARA, Takahisa, Settsu-shi Osaka 566-0072 (JP); KUSAKABE, Masato, Settsu-shi Osaka 566-0072 (JP)
(74) Representative: HOFFMANN EITLE
(86) International application number: PCT/JP2010/006864
(87) International publication number: WO 2011/064994

(57) **Abstract**

The invention provides a carbon fiber-reinforced composite material including reinforcing fibers which are continuous carbon fibers in the form of a unidirectional (UD) material, a woven fabric, or a knitted fabric, and a matrix resin including a modified polyolefin resin, thereby achieving better adhesion and mechanical strength. The matrix resin forms a polyphase structure having a sea-island structure which has an average island (independent phase) diameter of not greater than 0.5 µm. The composite material includes as a matrix resin a modified polyolefin resin obtained by, for example, graft-modifying a polyolefin resin with a monomer that contains an ethylenic double bond and a polar group in the same molecule; and includes as reinforcing fibers continuous carbon fibers. For example, the fiber-reinforced composite material is obtained by stacking the modified polyolefin resin and carbon fibers in a mold with a predetermined shape, and impregnating the carbon fibers with the modified polyolefin resin in a molten state under pressure, followed by cooling and curing.

## Description

### TECHNICAL FIELD

The present invention relates to a carbon fiber-reinforced thermoplastic composite material that contains carbon fibers as a reinforcing material and a thermoplastic resin as a base material (matrix).

### BACKGROUND ART

Carbon fiber-reinforced composite materials containing a thermosetting resin as a matrix resin have excellent mechanical properties, and are used in broad fields such as sporting goods (e.g., golf club, tennis racket, fishing rod), as well as structural materials for aircrafts, vehicles and the like, and reinforcing materials for concrete structures.

Carbon fiber-reinforced composite materials including a thermosetting resin have an advantage that they allow integral molding of large-sized components having complex shapes. However, these composite materials take several hours to cure, and are thus not suitable to produce, through a single molding process, small, complex-shaped components or structures for home electric appliances, electronic devices and the like, which are required to have thinness, lightweight, rigidity, and mass-productivity, compared to plastic materials to be injection molded.

Meanwhile, carbon fiber-reinforced composite materials including a thermoplastic resin are produced by impregnating reinforcing fibers with a soft or melted thermoplastic resin, and providing a final shape to the resulting product, followed by cooling and solidifying. These composite materials can be produced by, for example, a method including two steps of preliminarily preparing a pellet-shaped molded product incorporating discontinuous reinforcing fibers, or a molded product in the form of a consolidated sheet (stampable sheet), tape, or stick in which discontinuous or continuous reinforcing fibers are partially bonded to each other with a thermoplastic resin, through injection molding or extrusion molding; and then press-molding the molded product into a predetermined shape, as described in Patent Documents 1 to 3. Here, the increased number of steps brings a problem that it takes more time to prepare a composite material having the final shape.

One example of the thermoplastic resin is polyolefin resins including, for example, polypropylene resins. Polyolefin resins are used in a wide range such as films, fiber and other differently shaped molded products for general purposes because they are excellent in properties such as moldability, rigidity, heat resistance, chemical resistance, and electrical insulation properties, and are also inexpensive. Meanwhile, polypropylene materials have a problem of low adhesion to different materials such as metal materials and carbon materials because they are polymer materials that are free from polar groups in the molecules (i.e., non-polar) and very inactive, as well as having high crystallinity and significantly low solubility in solvents.

As above, carbon fibers used for fiber-reinforced composite materials have high strength and high elastic modulus, but have a problem that since the wettability of carbon fibers is low at the time of impregnating carbon fibers with a melted polyolefin in the production of a composite material of carbon fibers and a polyolefin resin, voids (openings) tend to easily form in the produced composite material. Accordingly, high adhesion has been desired between carbon fibers and a thermoplastic resin (matrix resin), for excellent mechanical properties.

For that purpose, methods for increasing wettability have been proposed such as methods of physically opening a fiber bundle using a bar as described in Patent Document 4; and methods of functionalizing the surface of carbon fibers through plasma treatment, ozone treatment, corona treatment, or chemical etching to enhance the chemical bonding, or of applying a sizing agent suited for a polyolefin resin, or of pulverizing a polyolefin resin, as described in Patent Documents 5 to 7. Still, these methods have problems such as that the increased number of steps results in an increase in the production cost, and carbon fibers themselves are damaged.

Also, many methods have been proposed for producing a modified resin by graft polymerizing a polymerizable monomer containing a polar functional group onto an olefin resin. For example, mention may be made of modified polyolefin resins produced by melt-mixing a polyolefin resin and a polar monomer such as maleic anhydride, as described in Patent Documents 8 to 10. These modified polyolefin resins, however, are not considered to have sufficiently increased adhesion to difficult-to-adhere substrates such as metal materials and carbon materials.

### CITATION LIST

### PATENT LITERATURE

Patent Document 1: JP 2005-125581 A
Patent Document 2: JP 2005-97388 A
Patent Document 3: JP H05-112657 A
Patent Document 4: JP 2003-277525 A
Patent Document 5: JP 2003-073932 A
Patent Document 6: JP 2003-128799 A
Patent Document 7: JP 2005-213679 A
Patent Document 8: JP 2005-213478 A
Patent Document 9: JP H01-236214 A
Patent Document 10: JP H05-209025 A

### SUMMARY OF INVENTION

### TECHNICAL PROBLEM

The present invention provides a carbon fiber-reinforced composite material that includes reinforcing fibers which are continuous carbon fibers in the form of a unidirectional (UD) material, a woven fabric, or a knitted fabric, and a matrix resin which includes a modified polyolefin resin, and achieves better adhesion and better mechanical strength. The matrix resin forms a polyphase structure having a sea-island structure, and the sea-island structure has an average island (independent phase) diameter of not greater than 0.5 µm.

### SOLUTION TO PROBLEM

Various studies have been made to solve these problems, and as a result, the present invention has been completed. The present invention includes the following features.
(1) A carbon fiber-reinforced composite material, including continuous carbon fibers and a matrix resin that includes a modified polyolefin resin.
(2) The carbon fiber-reinforced composite material according to item (1), wherein the matrix resin forms a polyphase structure having a sea-island structure, and the sea-island structure has an average island (independent phase) diameter of at least 0.01 µm but not greater than 0.5 µm.
(3) The carbon fiber-reinforced composite material according to item (1) or (2), wherein the modified polyolefin resin is obtained by graft-modifying a polyolefin resin with a monomer that contains an ethylenic double bond and a polar group in the same molecule.
(4) The carbon fiber-reinforced composite material according to any one of items (1) to (3), wherein the modified polyolefin resin is obtained by graft-modifying a polyolefin resin with a monomer that contains an ethylenic double bond and a polar group in the same molecule, in combination with an aromatic vinyl compound or a conjugated diene compound.
(5) The carbon fiber-reinforced composite material according to item (3) or (4), wherein the monomer that contains an ethylenic double bond and a polar group in the same molecule is at least one selected from (meth)acrylic acid, maleic anhydride, and glycidyl (meth)acrylate.
(6) The carbon fiber-reinforced composite material according to item (4) or (5), wherein the aromatic vinyl compound or the conjugated diene compound is at least one selected from styrene and isoprene.
(7) The carbon fiber-reinforced composite material according to any one of items (3) to (6), wherein the modified polyolefin resin has a graft ratio of 0.25 or higher.
(8) The carbon fiber-reinforced composite material according to any one of items (3) to (7), wherein the modified polyolefin resin has a graft length of 1000 or more in number average molecular weight.
(9) The carbon fiber-reinforced composite material according to any one of items (1) to (8), wherein the matrix resin is contained in an amount of 20% to 70% by weight.
(10) The carbon fiber-reinforced composite material according to any one of items (1) to (9), wherein the continuous carbon fibers are in the form of a unidirectional (UD) material, a woven fabric, or a knitted fabric.
(11) The carbon fiber-reinforced composite material according to any one of items (1) to (10), which is produced by alternately stacking one or more layers of the matrix resin and one or more layers of the carbon fibers, and then impregnating the carbon fibers with the matrix resin in a molten state at a temperature not lower than a melting point of the matrix resin, under pressure, followed by cooling and curing.
(12) The carbon fiber-reinforced composite material according to any one of items (1) to (11), which is produced by:
   stacking layers of a carbon fiber composite material that is produced by alternately stacking one or more layers of the matrix resin and one or more layers of the carbon fibers, followed by applying pressure at a temperature not lower than a melting point of the matrix resin; and
   applying pressure at a temperature not lower than the melting point of the matrix resin.
(13) The carbon fiber-reinforced composite material according to any one of items (2) to (12), wherein the sea-island structure includes 4000 or more islands (independent phase) per 10 µcm².
(14) The carbon fiber-reinforced composite material according to any one of items (2) to (13), wherein the sea-island structure includes a sea (continuous phase) formed from a polyolefin resin, and an island (independent phase) formed from a monomer that contains an ethylenic double bond and a polar group in the same molecule, and an aromatic vinyl compound or a conjugated diene compound.
(15) The carbon fiber-reinforced composite material according to any one of items (1) to (14), which has an apparent interlaminar shear strength of 25 MPa or higher at 25°C based on ASTM-D2344.

### ADVANTAGEOUS EFFECTS OF INVENTION

The present invention enables to produce a carbon fiber-reinforced composite material that includes continuous carbon fibers and a matrix resin including a modified polyolefin resin, has excellent interfacial adhesion between the matrix resin and the carbon fibers, and has better mechanical properties.

### BRIEF DESCRIPTION OF DRAWINGS

Fig. 1 is a transmission electron microscope photograph of a modified polypropylene prepared in Preparation 1 according to the present invention.
Fig. 2 is a transmission electron microscope photograph of the matrix resin portion of a carbon fiber composite material produced in Example 1 of the present invention.

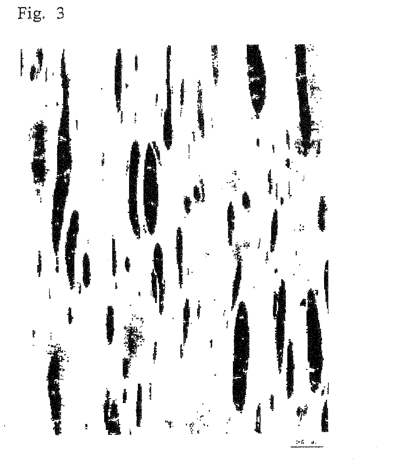

Fig. 3 is a transmission electron microscope photograph of QE-060E used in Comparative Example 4 of the present invention.

### DESCRIPTION OF EMBODIMENTS

The present invention is described in detail below.

The carbon fibers used in the present invention are a continuous fiber material that has a carbon content of 85 to 100 wt% and at least partially has a graphite structure. Examples thereof include, but not particularly limited to, polyacrylonitrile (PAN)-based fibers, rayon-based fibers, lignin-based fibers, and pitch-based fibers. Among these, PAN-based or pitch-based carbon fibers are preferred in terms of their versatility, inexpensiveness, and high strength. Generally, the carbon fibers to be used have been subjected to sizing treatment, and such carbon fibers may be used as they are or after removal of the sizing using an organic solvent or the like as needed. Also, it is preferable to preliminarily open the fiber bundle using air, a roller or the like in order to allow the resin to be impregnated between single yarns of the carbon fibers.

The carbon fibers are preferably used in the form of a bundle, i.e., a carbon fiber bundle, in terms of handleability, and the number of single fibers constituting a carbon fiber bundle is preferably 1000 to 480000, more preferably 3000 to 100000, and still more preferably 3000 to 24000.

The carbon fibers may be used in combination with, for example, other kinds of carbon fibers, inorganic fibers (e.g., glass fibers, metal fibers, ceramic fibers), or organic synthetic fibers (e.g., polyamide fibers, polyester fibers, polyolefin fibers, novoloid fibers), to the extent that the effects of the present invention are not deteriorated.

The form of the fiber material included in the fiber-reinforced composite material is a continuous fibrous structure such as unidirectionally aligned fibers (UD materials), woven fabrics (e.g., woven fabrics of plain weave, satin weave, leno weave, mock leno weave, twill weave, double weave), and knitted fabrics. The form is not particularly limited, and may be appropriately selected according to the purpose. The above structures may be used independently or in combination. For easy production of a carbon fiber composite material uniformly impregnated with the matrix resin, the form is more preferably a UD material or a woven material.

The polyolefin resin used in the present invention is not particularly limited, and various polyolefin resins can be used. Examples thereof include polyethylene, polypropylene, poly-1-butene, polyisobutylene, random copolymers or block copolymers of propylene with ethylene and/or 1-butene at any ratio, ethylene-propylene-diene terpolymers including 50 wt% or less of the diene component with any ratio between ethylene and propylene, polymethylpentene, cyclic polyolefins (e.g., copolymers of cyclopentadiene with ethylene and/or propylene), random copolymers or block copolymers of ethylene or propylene with 50 wt% or less of a vinyl compound or the like, ethylene/vinyl chloride copolymers, ethylene/vinylidene chloride copolymers, ethylene/acrylonitrile copolymers, ethylene/methacrylonitrile copolymers, ethylene/vinyl acetate copolymers, ethylene/acrylamide copolymers, ethylene/methacrylamide copolymers, ethylene/acrylic acid copolymers, ethylene/methacrylic acid copolymers, ethylene/maleic acid copolymers, ethylene/methyl acrylate copolymers, ethylene/ethyl acrylate copolymers, ethylene/isopropyl acrylate copolymers, ethylene/butyl acrylate copolymers, ethylene/isobutyl acrylate copolymers, ethylene/2-ethylhexyl acrylate copolymers, ethylene/methyl methacrylate copolymers, ethylene/ethyl methacrylate copolymers, ethylene/isopropyl methacrylate copolymers, ethylene/butyl methacrylate copolymers, ethylene/isobutyl methacrylate copolymers, ethylene/2-ethylhexyl methacrylate copolymers, ethylene/maleic anhydride copolymers, ethylene/ethyl acrylate/maleic anhydride copolymers, ethylene/metal acrylate copolymers, ethylene/metal methacrylate copolymers, ethylene/vinyl acetate copolymers or saponified products thereof, ethylene/vinyl propionate copolymers, ethylene/glycidyl methacrylate copolymers, ethylene/ethyl acrylate/glycidyl methacrylate copolymers, ethylene/vinyl acetate/glycidyl methacrylate copolymers and other copolymers of ethylene or an α-olefin with a vinyl monomer; and chlorinated polyolefins such as chlorinated polypropylene and chlorinated polyethylene.

Among these polyolefin resins, polyethylene and polypropylene are preferred in terms of factors such as excellent property balance, easy availability of various kinds, and inexpensiveness, and polyethylene and polypropylene which have a major amount of ethylene units and propylene units, respectively, are preferred.

Grafting of a monomer that contains an ethylenic double bond and a polar group in the same molecule onto such a polyolefin resin contributes to improvement of the interfacial adhesion of the resin to the carbon fibers.

The monomer that contains, in the same molecule, an ethylenic double bond and a polar group for graft modification of the polyolefin resin is not particularly limited, and various monomers can be used. Suitable examples of the polar group include carboxylic acids, and acid anhydrides or derivatives thereof.

Specific examples of such a monomer include unsaturated carboxylic acids such as acrylic acid, methacrylic acid, maleic acid, fumaric acid, tetrahydrophthalic acid, itaconic acid, citraconic acid, crotonic acid, isocrotonic acid, norbornenedicarboxylic acid, and bicyclo[2,2,1]hept-2-ene-5,6-dicarboxylic acid, acid anhydrides thereof, and derivatives thereof (e.g., acid halides, amides, imides, esters).

Specific examples of these compounds include malenyl chloride, malenyl imide, maleic anhydride, itaconic anhydride, citraconic anhydride, tetrahydrophthalic anhydride, bicyclo[2,2,1]hept-2-ene-5,6-dioarboxylic anhydride, dimethyl maleate, monomethyl maleate, diethyl maleate, diethyl fumarate, dimethyl itaconate, diethyl citraconate, dimethyl tetrahydrophthalate, dimethyl bicyclo[2,2,1]hept-2-ene-5,6-dicarboxylate, hydroxyethyl (meth)acrylate, hydroxypropyl (meth)acrylate, glycidyl (meth)acrylate, monoglycidyl maleate, diglycidyl maleate, monoglycidyl itaconate, diglycidyl itaconate, monoglycidyl allylsuccinate, diglycidyl allylsuccinate, glycidyl p-styrenecarboxylate, allyl glycidyl ether, methallyl glycidyl ether, styrene-p-glycidyl ether, p-glycidylstyrene, 3,4-epoxy-1-butene, 3,4-epoxy-3-methyl-1-butene, vinylcyclohexene monoxide, aminoethyl methacrylate, and aminopropyl methacrylate. Among these, (meth)acrylic acid, maleic anhydride, and glycidyl (meth)acrylate are preferred.

The amount of the monomer that contains an ethylenic double bond and a polar group in the same molecule is not particularly limited, and is preferably 0.1 to 20 parts by weight for each 100 parts by weight of the main chain polyolefin. An amount of smaller than 0.1 parts by weight may result in insufficient adhesion to the carbon fibers, while an amount of larger than 20 parts by weight may result in many residual monomers left, adversely affecting the physical properties.

In graft polymerization of the polyolefin with an ethylenically unsaturated carbonxylic acid or a derivative thereof, another monomer may be used as long as the effects of the present invention are not deteriorated. Examples of the other monomer include hydroxyl group-containing ethylenically unsaturated compounds, amino group-containing ethylenically unsaturated compounds, aromatic vinyl compounds, conjugated diene compounds, vinyl ester compounds, vinyl chloride, and oxazoline group-containing unsaturated monomers.

In the case of using an aromatic vinyl compound or a conjugated diene compound, molecular chain scission at the time of grafting onto a molecular chain scission-type polyolefin such as polypropylene is inhibited, which enables to introduce an ethylenically unsaturated carboxylic acid or a derivative thereof at a high ratio while maintaining the high molecular weight.

For example, the aromatic vinyl compound may be one or two or more of the following: styrene; methylstyrenes such as o-methylstyrene, m-methylstyrene, p-methylstyrene, α-methylstyrene, β-methylstyrene, dimethylstyrene, and trimethylstyrene; chlorostyrenes such as o-chlorostyrene, m-chlorostyrene, p-chlorostyrene, α-chlorostyrene, β-chlorostyrene, dichlorostyrene, and trichlorostyrene; bromostyrenes such as o-bromostyrene, m-bromostyrene, p-bromostyrene, dibromostyrene, and tribromostyrene; fluorostyrenes such as o-fluorostyrene, m-fluorostyrene, p-fluorostyrene, difluorostyrene, and trifluorostyrene; nitrostyrenes such as o-nitrostyrene, m-nitrostyrene, p-nitrostyrene, dinitrostyrene, and trinitrostyrene; vinylphenols such as o-hydroxystyrene, m-hydroxystyrene, p-hydroxystyrene, dihydroxystyrene, and trihydroxystyrene; divinylbenzenes such as o-divinylbenzene, m-divinylbenzene, and p-divinylbenzene; and diisopropenylbenzenes such as o-diisopropenylbenzene, m-diisopropenylbenzene, and p-diisopropenylbenzene, and the like. Among these, styrene, methylstyrenes such as α-methylstyrene and p-methylstyrene, divinylbenzene monomers and divinylbenzene isomer mixtures are preferred in terms of inexpensiveness.

Examples of the conjugated diene compounds include 1,3-butadiene, 1,3-pentadiene, isoprene, and chloroprene. Among these, isoprene is preferred in terms of easy handleability due to its liquid state, and of inexpensiveness.

The amount of the aromatic vinyl monomer or the conjugated diene monomer to be added is preferably 0.01 to 10 parts by weight, and more preferably 0.1 to 5 parts by weight, for each 100 parts by weight of the polyolefin resin. Too small an amount to be added tends to result in a decreased graft ratio of the monomer that contains an ethylenic double bond and a polar group in the same molecule to the polyolefin resin. Conversely, addition of an amount of greater than 10 parts by weight may lead to a saturation of the graft efficiency of the monomer that contains an ethylenic double bond and a polar functional group in the same molecule.

Reacting the polyolefin, the monomer that contains an ethylenically unsaturated group and a polar functional group in the same molecule, and optionally the aromatic vinyl monomer or the conjugated diene monomer in the presence or absence of a radical polymerization initiator by heating enables to produce a modified polyolefin.

Examples of the radical polymerization initiator include organic peroxides and azo compounds. For example, mention may be made of one or two or more of the following organic peroxides: ketone peroxides such as methyl ethyl ketone peroxide and methyl acetoacetate peroxide; peroxy ketals such as 1,1-bis(t-butylperoxy)-3,3,5-trimethylcyclohexane, 1,1-bis(t-butylperoxy)cyclohexane, n-butyl-4,4-bis(t-butylperoxy)valerate, and 2,2-bis(t-butylperoxy)butane; hydroperoxides such as permethane hydroperoxide, 1,1,3,3-tetramethylbutyl hydroperoxide, diisopropylbenzene hydroperoxide, and cumene hydroperoxide; dialkyl peroxides such as dicumyl peroxide, 2,5-dimethyl-2,5-di(t-butylperoxy)hexane, α,α'-bis(t-butylperoxy-m-isopropyl)benzene, t-butyl cumyl peroxide, di-t-butyl peroxide, and 2,5-dimethyl-2,5-di(t-butylperoxy)hexyne-3; diacyl peroxides such as benzoyl peroxide; peroxydicarbonates such as di(3-methyl-3-methoxybutyl)peroxydicarbonate and di-2-methoxybutyl peroxydicarbonate; peroxy esters such as t-butyl peroxyoctoate, t-butyl peroxyisobutyrate, t-butyl peroxylaurate, t-butyl peroxy-3,5,5-trimethyl hexanoate, t-butyl peroxyisopropylcarbonate, 2,5-dimethyl-2,5-di(benzoylperoxy)hexane, t-butyl peroxyacetate, t-butyl peroxybenzoate, and di-t-butyl peroxyisophthalate, and the like.

Among these, those having high hydrogen abstraction ability are particularly preferred. For example, such a radical polymerization initiator may be one or two or more of the following: peroxy ketals such as 1,1-bis(t-butylperoxy)-3,3,5-trimethylcyclohexane, 1,1-bis(t-butylperoxy)cyclohexane, n-butyl-4,4-bis(t-butylperoxy)valerate, and 2,2-bis(t-butylperoxy)butane; dialkyl peroxides such as dicumyl peroxide, 2,5-dimethyl-2,5-di(t-butylperoxy)hexane, α,α'-bis(t-butylperoxy-m-isopropyl)benzene, t-butyl cumyl peroxide, di-t-butyl peroxide, and 2,5-dimethyl-2,5-di(t-butylperoxy)hexyne-3; diacyl peroxides such as benzoyl peroxide; peroxy esters such as t-butyl peroxyoctoate, t-butyl peroxyisobutyrate, t-butyl peroxylaurate, t-butyl peroxy-3,5,5-trimethyl hexanoate, t-butyl peroxyisopropylcarbonate, 2,5-dimethyl-2,5-di(benzoylperoxy)hexane, t-butyl peroxyacetate, t-butyl peroxybenzoate, and di-t-butyl peroxyisophthalate, and the like.

The amount of the radical polymerization initiator to be added is preferably in the range of 0.01 to 10 parts by weight, and more preferably in the range of 0.2 to 5 parts by weight, for each 100 parts by weight of the polyolefin resin. An amount of smaller than 0.01, parts by weight may not allow the modification to proceed sufficiently, while an amount of greater than 10 parts by weight may cause a decrease in the flowability and mechanical properties.

The graft polymerization reaction in the present invention is not particularly limited, and may be a reaction such as solution polymerization, impregnation polymerization, and melt polymerization. Particularly, melt polymerization is preferred for its simplicity.

Regarding the order of addition and the method in melt kneading, the order of addition is preferably such that a polyolefin resin, a radical polymerization initiator, and a monomer that contains an ethylenic double bond and an acid polar group in the same molecule are melt kneaded to prepare a mixture, and thereto are added an aromatic vinyl monomer and an epoxy group-containing vinyl monomer, followed by melt kneading. This order of addition enables to efficiently graft the monomer that contains an ethylenic double bond and a polar functional group in the same molecule onto the polyolefin, and to suppress a decrease in the mechanical properties during the modification. It is noted that the orders and methods for mixing or melt kneading other materials which may be added as needed are not particularly limited.

The heating temperature in melt kneading is preferably 100°C to 250°C in that the polyolefin resin is sufficiently melted but is not pyrolyzed. Also, the period of time for melt kneading (period from the start of mixing a radical polymerization initiator) is usually 30 seconds to 60 minutes.

The device used for the melt kneading may be an extruder, a Banbury mixer, a mill, a kneader, a heating roller or the like. The method using a single screw extruder or a twin screw extruder is preferred in terms of productivity. In order to sufficiently uniformly mix the materials, the melt kneading may be repeated multiple times.

The graft ratio of the modified polyolefin obtained through graft polymerization is determined based on grafted monomers among used monomers containing an ethylenic double bond and a polar group in the same molecule. However, direct observation for the modified polyolefin is a very difficult measurement. For this reason, for example, the following method may be mentioned. The modified polyolefin obtained through graft polymerization reaction is dissolved in hot xylene, and then cooled so that a graft polymer is crystallized. The graft ratio can be determined by subjecting the crystallized modified polyolefin (graft polymer) to titrimetric analysis or infrared spectroscopy (IR).

The graft ratio of the modified polyolefin is preferably 0.25 or higher, more preferably 0.3 or higher, and still more preferably 0.5 or higher.

A simple and preferred method for determining the length of the graft chain of the modified polyolefin obtained through graft polymerization is, for example, a method of subjecting a free polymer, collected by concentrating the mother liquor (xylene solution) after crystallization mentioned above, to gel permeation chromatography (GPC) to calculate a polystyrene equivalent number average molecular weight as the length. The number average molecular weight of the graft is preferably 1000 or more, more preferably 1500 or more, and still more preferably 2000 or more.

The modified polyolefin resin in the present invention may contain, as needed, stabilizers such as an antioxidant, a metal deactivator, a phosphorus processing stabilizer, an UV absorbent, a UV stabilizer, a fluorescent brightener, a metal soap, and an antacid adsorbent, and other additives such as a crosslinking agent, a chain transfer agent, a nucleator, a lubricant, a plasticizer, a filler, a reinforcing agent, a pigment, a dye, a flame retardant, and an antistatic agent, as long as the effects of the present invention are not deteriorated. In the case of using these stabilizers and additives, they may be added to the polyolefin resin in advance or at the time of graft-modifying the polyolefin resin. Alternatively, after a modified polyolefin resin is produced, they may be added to the modified polyolefin resin by an appropriate method.

In the present invention, the modified polyolefin resin may be mixed with another polyolefin resin and then used as the matrix resin.

Examples of the other polyolefin resin that may be mixed with the modified polyolefin resin in the present invention include polypropylene homopolymers, high density polyethylene, low density polyethylene, linear low density polyethylene, poly-1-butene, polyisobutylene, random copolymers or block copolymers of propylene with ethylene and/or 1-butene at any ratio, ethylene-propylene-diene terpolymers including 50 wt% or less of a diene component with any ratio between ethylene and propylene, polymethylpentene, cyclic polyolefins (e.g., copolymers of cyclopentadiene with ethylene and/or propylene), random copolymers of ethylene or propylene with 50 wt% or less of a vinyl compound (e.g., vinyl acetate, alkyl methacrylate esters, alkyl acrylate esters, aromatic vinyls), polyolefin thermoplastic elastomer block copolymers, and olefin thermoplastic elastomers (simple mixtures of polypropylene and an ethylene/propylene copolymer or an ethylene-propylene-diene terpolymer, partially crosslinked products thereof, or fully crosslinked products thereof). Each of these may be used alone, or two or more of these may be used in admixture.

Among these, polypropylene homopolymers are preferred in terms of high rigidity and inexpensiveness, and block copolymers of propylene and another monomer are preferred in terms of both high rigidity and high impact resistance. In the case that flexibility is required, polyolefin thermoplastic elastomers are preferred.

In the case that the modified polyolefin resin is mixed with another polyolefin resin in the present invention, the mixing amount thereof is not particularly limited. In terms of the adhesion, the amount of the other polyolefin resin is preferably 0.1 to 100 parts by weight, more preferably 0.1 to 70 parts by weight, still more preferably 0.3 to 50 parts by weight, and even more preferably 0.5 to 20 parts by weight, for each 100 parts by weight of the modified polyolefin resin.

The matrix resin including the modified polyolefin resin employed in the present invention can be prepared as above, and the matrix resin preferably has a polyphase structure as its phase structure. The polyphase structure preferably has a sea-island structure as observed by a transmission electron microscope.

The shape of the island (independent phase) of the sea-island structure may be circular, triangular, quadrangular, or other shapes although the geometric shape of the island is not particularly defined. Preferably, the island has an average diameter of at least 0.01 µm but has an average maximum diameter of not greater than 0.5 µm, more preferably not greater than 0.2 µm, and particularly preferably not greater than 0.1 µm. Also, the sea-island structure preferably includes 4000 or more islands (independent phase) per 10 µm², and the islands are preferably dispersed uniformly and finely.

In the sea-island structure, the sea (continuous phase) may be formed from a polyolefin resin, and the island (independent phase) may be an aggregate of a branch component derived from a monomer that contains an ethylenic double bond and a polar group in the same molecule, and an aromatic vinyl compound or a conjugated diene compound, optionally with the monomers not having been grafted onto the polyolefin resin which are copolymerized at any ratio. Preferably, the island (independent phase) is formed from a branch component that has been grafted onto the polyolefin resin. Since particles of the independent phase are finely dispersed in the continuous phase as described above, a composite material having excellent interfacial adhesion to the carbon fibers can be produced.

The form of the matrix resin to be used in production of the fiber-reinforced composite material of the present invention is not particularly limited, and the matrix resin may be used in the form of pellets, films, plates, or powder. The amount of the resin in the fiber-reinforced composite material should be usually 20 to 90 wt%, preferably 20 to 70 wt%, and more preferably 30 to 65 wt%.

The production method of the composite material of carbon fibers and a matrix resin is not particularly limited. Usually, an integral molding method is employed which includes alternately stacking one or more layers of the matrix resin and one or more layers of the carbon fibers, and then impregnating the carbon fibers with the polyolefin in a molten state at a high temperature under pressure with use of a device (e.g., a pressing machine, a lamination molding machine, an extruder, an injection molding machine), followed by cooling and curing.

Mention may also be made of a method of stacking multiple layers of the obtained carbon fiber composite material alone or optionally together with an adhesive resin inserted between the layers, followed by integration at a high temperature under pressure using the above molding device.

The adhesive resin used for bonding the carbon fiber composite material is preferably, for example, a resin used as the matrix of a dry prepreg, or the like because such a resin can easily be integrated with the resin in the carbon fiber composite material at the time of molding, and thereby contributes to better interlaminar adhesion. Also, a different kind of resin adhesive may be used as long as it does not deteriorate the interlaminar shear strength of the produced carbon fiber composite material, and an adhesive mixed with a filler or the like may be used in order to provide higher adhesion strength. Also, integrated layers of the carbon fiber composite material may be drilled so that the layers are mechanically jointed using a bolt, rivet or the like.

The temperature for melting the used matrix resin in production of the fiber-reinforced composite material of the present invention is not particularly limited as long as it is not lower than the melting point of the matrix resin. The temperature is preferably 200°C or higher, and more preferably 220°C or higher.

In production of the fiber-reinforced composite material of the present invention, the pressure condition for impregnation of the carbon fibers with the molten matrix resin is preferably under pressure at 1 MPa or higher, and more preferably 10 MPa or higher.

The apparent interlaminar shear strength of the carbon fiber composite material obtained in the present invention is defined as "apparent" interlaminar shear strength because the measurement based on the ASTM-D2344 test method may possibly result in occurrence of other failure modes such as compression failure and tensile failure of the resin, along with interlaminar shear failure in the interface. The apparent interlaminar shear strength is preferably 25 MPa or higher, and more preferably 30 MPa or higher, for practical use.

### EXAMPLES

Hereinafter, the present invention is described based on the following examples which, however, are not intended to limit the scope of the present invention. The used raw materials and the measurement conditions of the properties are described below.

### <Preparation of modified polyolefin resin>

(Preparation 1) Preparation of glycidyl methacrylate/styrene (GMA/St)-modified polypropylene: A hopper of a twin screw extruder (TEX44, L/D=40, product of The Japan Steel Works, LTD.) set to 200°C was fed with (a) 100 parts by weight of homopolypropylene (J105G, product of Prime Polymer Co., Ltd., MFR=9) and (b) 0.5 parts by weight of 1,3-di(t-butylperoxyisopropyl)benzene (product of NOF Corporation, PERBUTYL P, one-minute half-life temperature: 175°C), and the materials were melt kneaded. A liquid mixture of (c) 5 parts by weight of styrene and (d) 5 parts by weight of glycidyl methacrylate was then injected at the middle of the cylinder, and the resulting mixture was melt kneaded, so that pellets of a modified polypropylene resin were obtained. The melt flow rate (MFR) of the resin was determined to be 100 (g/10 min) as a result of measurement at 230°C based on JIS K7210. The obtained pellets were fed into a T-die film forming device, and thereby a 100-µm-thick film was obtained. Separately, another portion of the pellets was freeze-crushed, so that a modified polypropylene powder was obtained. Also, yet another portion of the obtained pellets was dissolved in hot xylene, and then crystallized to obtain a graft polymer which was then titrated. As a result, the graft ratio was found to be 1.2. The mother liquor (xylene solution) after the crystallization of the graft polymer was concentrated, and the molecular weight thereof was determined by GPC to be 4400, which was taken as the molecular weight of the graft chain.

(Preparation 2) Preparation of maleic anhydride/styrene (MAH/St)-modified polypropylene: A twin screw extruder with a vent (30 mmφ, L/D=28, product of The Japan Steel Works, LTD., product name: LABOTEX30, vent pressure: 60 cmHg) set to a cylinder temperature of 200°C and a screw speed of 250 rpm was fed with 100 parts of homopolypropylene (J105G, product of Prime Polymer Co., Ltd., MFR=9), 0.1 parts of 1,3-di(t-butylperoxyisopropyl)benzene (product of NOF Corporation, PERBUTYL P, one-minute half-life temperature: 175°C), and 1 part of maleic anhydride (product of Wako Pure Chemical Industries, Ltd.), and the materials were melt kneaded. An amount of 1 part of styrene was then added at the middle of the cylinder, and the resulting mixture was melt kneaded, so that pellets of a modified polyolefin resin were obtained. The MFR of the resin measured at 230°C based on JIS K7210 was 11 (g/10 min). The obtained pellets were fed into a T-die film forming device, and thereby a 30-µm-thick film was obtained. Also, another portion of the obtained pellets was dissolved in hot xylene, and then crystallized to obtain a graft polymer which was then subjected to IR measurement. As a result, the graft ratio was found to be 0.25. The mother liquor (xylene solution) after the crystallization of the graft polymer was concentrated, and the molecular weight thereof was determined by GPC to be 3200, which was taken as the molecular weight of the graft chain.

In addition to the above Preparations 1 and 2, a maleic anhydride-modified polypropylene (trade name: QE-060E (admer film), thickness: 30 µm, MFR: 10 (g/10 min) (value measured at 230°C based on JIS K7210)) produced by Tohcello Co., Ltd. was used as it was for comparative experiments.

Also, an unmodified polypropylene (product of Prime Polymer Co., Ltd., S119, MFR: 60 (g/10 min) (value measured at 230°C based on JIS K7210)) was formed into a 100-µm-thick film by a T-die film forming device, and the film was used.

### <Carbon fibers>

PAN-based carbon fibers (trade name: IM60S plain weave material, web basis weight: 195 g/m², density: 1.80 g/cm³; trade name: W3101 plain weave material, web basis weight: 200 g/m², density: 1.76 g/cm³), product of Toho Tenax Co., Ltd.

### <Measurement of interlaminar shear strength of carbon fiber composite material>

The measurement was performed based on ASTM-D2344.

### <Determination of the number of islands (independent phase) >

Determination of the number of islands (independent phase) in the matrix resin was performed by the following method.

The obtained fiber-reinforced composite material is first observed with a transmission electron microscope to obtain a microphotograph at forty thousand times magnification. A copy of the microphotograph at 4x magnification is read with a scanner, and the number of domains per 10 µm² is determined using an image-analysis software.

In the present invention, the determination was performed with the transmission electron microscope JEM-1200EX (product of JEOL Ltd.) at an accelerating voltage of 80 kV. Specimens were prepared by frozen ultrathin sectioning following ruthenium oxide staining. The scanner used was GT-7000U (product of EPSON Corporation) with TWAIN used for reading to adjust the concentration. The image-analysis software used was AZOKUN produced by Asahi Kasei Engineering Corporation, and the number of domains having a domain area of 10 nm² or larger was counted. The particle analysis parameters used are listed below.

Particle brightness: Middle
Binarization method: Automatic
Fixed threshold: None
Contour correction: Four sides
Hole filling: YES
Small structuring element removal area: 10 nm²
Correcting method: Erosion
Erosion separation: Number of times: 10, Small
structuring element: 5, Degree of contact: 100
Noise removal filter: None
Shading: None

### <Production method of carbon fiber composite material>

### (Example 1)

A stainless steel plate (thickness: 1 cm, 10-cm square) having a projection (thickness: 2 mm, 6.5-cm square) was engaged with a stainless steel spacer (thickness: 1 cm, 10-cm square) having a central opening (thickness: 1 cm, 6.5-cm square). A Teflon (registered trademark) sheet was placed as a release film in the opening, and the modified polypropylene film prepared in Preparation 1 and the carbon fiber plain weave material were alternately stacked on the sheet such that the resulting stack had a total of 13 polypropylene layers and a total of 12 carbon fiber layers. The amount of the stacked polypropylene was adjusted to 50 wt% of the total weight of the composite material. The carbon fiber plain weave material used was one from which the sizing agent had been removed using an acetone solvent.

On the top of the stack, the same modified polypropylene film was further stacked. After placing in a 230°C vacuum chamber, the resulting stack was vacuum distilled for 20 minutes while the resin was being melted. Another Teflon (registered trademark) sheet was stacked thereon, and then a stainless steel plate (thickness: 1 cm, 10-cm square) having a projection (thickness: 6 mm, 6.5-cm square) was engaged with the above plate with the stack. The stack was compression-molded in a press-molding device (molding temperature: 230°C, pressure: 12 MPa, period of time: 10 minutes), and cooled and cured. Thereby, a plate-shaped carbon fiber composite material having a thickness of about 2 to 3 mm was produced. Table 1 shows the results.

(Example 2) A carbon fiber composite material was produced in the same manner as in Example 1, except that the pressure applied was 20 MPa. Table 1 shows the results.

(Example 3) A carbon fiber composite material was produced in the same manner as in Example 1, except that the modified polypropylene used was in the form of powder, and the powder was deposited between the carbon fiber layers. Table 1 shows the results.

(Example 4) A carbon fiber composite material was produced in the same manner as in Example 1, except that the modified polypropylene used was in the form of powder, and the pressure applied was 20 MPa. Table 1 shows the results.

(Example 5) A carbon fiber composite material was produced in the same manner as in Example 1, except that the modified polypropylene prepared in Preparation 2 was used. Table 1 shows the results.

(Comparative Example 1) The modified polypropylene prepared in Preparation 1 was formed into a plate (thickness: 2 mm) at a temperature of 200°C and a pressure of 50 MPa by a standard injection molding method.

(Comparative Example 2)A carbon fiber composite material was produced in the same manner as in Example 1, except that an unmodified polypropylene film was used. Table 1 shows the results.

(Comparative Example 3)A carbon fiber composite material was produced in the same manner as in Example 1, except that an unmodified polypropylene film was used, and the pressure applied was 20 MPa. Table 1 shows the results.

(Comparative Example 4) A carbon fiber composite material was produced in the same manner as in Example 1, except that the QE-060E film was used, and the pressure applied was 20 MPa. Table 1 shows the results.

(Example 6) A 20-cm square Teflon (registered trademark) sheet was placed on a 25-cm square stainless steel square plate, and thereon the modified polypropylene film prepared in Preparation 1 and a 15-cm square carbon fiber plain weave material were stacked in this order. On the top of the stack, the modified polypropylene film prepared in Preparation 1 and a 20-cm square Teflon (registered trademark) sheet were further stacked. The amount of the stacked polypropylene was adjusted to 50 wt% of the total weight of the composite material. The carbon fiber plain weave material used was one from which the sizing agent had been removed using an acetone solvent.

The resulting stack was placed on the platform of a pressing device at 230°C, and was then confirmed that the matrix resin was sufficiently melted. Subsequently, the stack was compression-molded under the conditions of 230°C, 90 seconds, and 10 MPa, and was then cooled and cured. Thereby, a dry carbon fiber prepreg including one carbon fiber plain weave material layer with a thickness of about 2.50 µm was produced.

Next, a stainless steel plate (thickness: 1 cm, 10-cm square) having a projection (thickness: 2 mm, 6.5-cm square) was engaged with a stainless steel spacer (thickness: 1 cm, 10-cm square) having a central opening (thickness: 1 cm, 6.5-cm square). A Teflon (registered trademark) sheet was placed as a release film in the opening, and the produced dry carbon fiber prepreg and the modified polypropylene film were alternately stacked on the sheet such that the resulting stack had a total of 13 polypropylene layers and a total of 12 carbon fiber layers. The amount of the polypropylene, including the amount of polypropylene in the dry prepreg, was adjusted to 40 wt% of the total weight of the composite material.

After placing in a 230°C vacuum chamber, the stack was vacuum distilled for five minutes while the resin was being melted. Another Teflon (registered trademark) sheet was then stacked on the stack, and a stainless steel plate (thickness: 1 cm, 10-cm square) having a projection (thickness: 6 mm, 6.5-cm square) was engaged with the above plate with the stack. The stack was compression-molded in a press-molding device (molding temperature: 230°C, pressure: 10 MPa, period of time: 90 seconds) for integration, and was then cooled and cured. Thereby, a laminate plate of a carbon fiber composite material having a thickness of about 2 to 3 mm was produced. Table 1 shows the results.
(Example 7) A carbon fiber composite material was produced in the same manner as in Example 6, except that a carbon fiber plain weave material from which the sizing agent had not been removed was used. Table 1 shows the results. (Example 8) A carbon fiber composite material was produced in the same manner as in Example 6, except that the modified polypropylene prepared in Preparation 2 was used. Table 1 shows the results.
(Comparative Example 5)A carbon fiber composite material was produced in the same manner as in Example 6, except that an unmodified polypropylene film was used. Table 1 shows the results.
(Comparative Example 6)A carbon fiber composite material was produced in the same manner as in Example 6, except that an unmodified polypropylene film and a carbon fiber plain weave material from which the sizing agent had not been removed were used. Table 1 shows the results.
(Comparative Example 7) A carbon fiber composite material was produced in the same manner as in Example 6, except that the QE-060E film was used, and the pressure applied was 20 MPa. Table 1 shows the results.

**[Table 1]**

| | Resin | Resin form | MFR value (g/10 min) | Molding conditions (Temperature/Pressure) | Produced carbon fiber composite material | | | |
|---|---|---|---|---|---|---|---|---|
| | | | | | Resin amount (wt%) | Fiber volume content (vol%) | Maximum load at break (N) | Apparent interlaminar shear strength (MPa) |
| Example 1 | Modified polypropylene of Preparation 1 | Film | 100 | 230°C/12 MPa | 34.0 | 49.3 | 690 | 29.5 |
| Example 2 | Modified polypropylene of Preparation 1 | Film | 100 | 230°C/20MPa | 31.0 | 52.6 | 560 | 27.4 |
| Example 3 | Modified polypropylenes of Preparation 1 | Powder | 100 | 230°C/12 MPa | 28.9 | 55.1 | 610 | 30.9 |
| Example 4 | Modified polypropylene of Preparation 1 | Powder | 100 | 230°C/20 MPa | 23.0 | 62.5 | 620 | 33.7 |
| Example 5 | Modified polypropylene of Preparation 2 | Film | 11 | 230°C/20MPa | 33.4 | 49.9 | 620 | 29.2 |
| Example 6 | Modified polypropylene of Preparation 1 | Film | 100 | 230°C/10 MPa | 39 | 44 | 803 | 33.0 |
| Example 7 | Modified polypropylene of Preparation 1 | Film | 100 | 230°C/10 MPa | 35 | 49 | 527 | 25 |
| Example 8 | Modified polypropylene of Preparation 2 | Film | 11 | 230°C/10MPa | 34 | 50 | 608 | 29.5 |
| Comparative Example 1 | Modified polypropylene of Preparation 1 | Plate | 100 | 200°C/50 MPa | 100.0 | 0 | 200 (At the time of plastic deformation) | N/A |
| Comparative Example 2 | Unmodified polypropylene | Film | 60 | 230°C/12 MPa | 31.7 | 51.9 | 450 | 18.7 |
| Comparative Example 3 | Unmodified polypropylene | Film | 60 | 230°C/20 MPa | 29.3 | 54.7 | 320 | 16.0 |
| Comparative Example 4 | QE-060E | Film | 10 | 230°C/20 MPa | 31.8 | 51.8 | 410 | 18.1 |
| Comparative Example 5 | Unmodified polypropylene | Film | 60 | 230°C/30 MPa | 21 | 66 | 318 | 19.4 |
| Comparative Example 6 | Unmodified polypropylene | Film | 60 | 230°C/10 MPa | 26 | 60 | 205 | 11.2 |
| Comparative Example 7 | QE-060E | Film | 10 | 230°C/10MPa | 30 | 55 | 312 | 16.8 |

The molded products produced from carbon fiber-reinforced modified polypropylenes in Examples 1 to 8 had practically sufficient interlaminar shear strength. On the other hand, the modified polypropylene plate of Comparative Example 1, the carbon fiber-reinforced unmodified polypropylenes of Comparative Examples 2 to 7, and the carbon fiber-reinforced modified polypropylene produced from QE-060E in Comparative Example 4 did not have sufficient strength and sufficient interlaminar shear strength. Accordingly, the comparison of these products clearly shows that the carbon fiber-reinforced composite material of the present invention exhibits excellent impregnation of the modified polypropylene to the carbon fibers, excellent adhesion, and excellent mechanical strength.

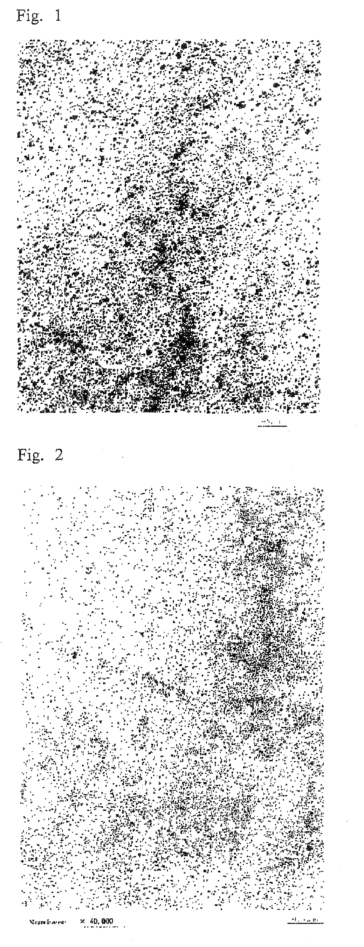

As to the observation of the number of islands (independent phase) in the matrix resin, a transmission electron microscope photograph of the modified polypropylene prepared in Preparation 1 showed a polyphase structure having a,sea-island structure. Fig. 1 shows the results. The islands (independent phase) had an average size of 0.2 µm or smaller, and the number of islands was measured to be 5000 or more per 10 µm². Similarly, a transmission electron microscope photograph of the matrix resin portion of the carbon fiber composite material produced in Example 1 showed a polyphase structure having a sea-island structure. The islands were finely dispersed with an average size of 0.1 µm or smaller, and the number of islands was 5000 or more per 10 µm². Fig. 2 shows the results. On the other hand, the QE-060E used in Comparative Example 4 had flattened islands with an average longest diameter of 1.5 µm or greater, and the number of islands per 10 µm² was 5 to 15.

## Claims

1. A carbon fiber-reinforced composite material, comprising
continuous carbon fibers, and
a matrix resin that includes a modified polyolefin resin.

2. The carbon fiber-reinforced composite material according to claim 1,
wherein the matrix resin forms a polyphase structure having a sea-island structure, and the sea-island structure has an average island (independent phase) diameter of at least 0.01 µm but not greater than 0.5 µm.

3. The carbon fiber-reinforced composite material according to claim 1 or 2,
wherein the modified polyolefin resin is obtained by graft-modifying a polyolefin resin with a monomer that contains an ethylenic double bond and a polar group in the same molecule.

4. The carbon fiber-reinforced composite material according to any one of claims 1 to 3,
wherein the modified polyolefin resin is obtained by graft-modifying a polyolefin resin with a monomer that contains an ethylenic double bond and a polar group in the same molecule, in combination with an aromatic vinyl compound or a conjugated diene compound.

5. The carbon fiber-reinforced composite material according to claim 3 or 4,
wherein the monomer that contains an ethylenic double bond and a polar group in the same molecule is at least one selected from (meth)acrylic acid, maleic anhydride, and glycidyl (meth)acrylate.

6. The carbon fiber-reinforced composite material according to claim 4 or 5,
wherein the aromatic vinyl compound or the conjugated diene compound is at least one selected from styrene and isoprene.

7. The carbon fiber-reinforced composite material according to any one of claims 3 to 6,
wherein the modified polyolefin resin has a graft ratio of 0.25 or higher.

8. The carbon fiber-reinforced composite material according to any one of claims 3 to 7,
wherein the modified polyolefin resin has a graft length of 1000 or more in number average molecular weight.

9. The carbon fiber-reinforced composite material according to any one of claims 1 to 8,
wherein the matrix resin is contained in an amount of 20% to 70% by weight.

10. The carbon fiber-reinforced composite material according to any one of claims 1 to 9,
wherein the continuous carbon fibers are in the form of a unidirectional (UD) material, a woven fabric, or a knitted fabric.

11. The carbon fiber-reinforced composite material according to any one of claims 1 to 10, which is produced by alternately stacking one or more layers of the matrix resin and one or more layers of the carbon fibers, and then impregnating the carbon fibers with the matrix resin in a molten state at a temperature not lower than a melting point of the matrix resin, under pressure, followed by cooling and curing.

12. The carbon fiber-reinforced composite material according to any one of claims 1 to 11, which is produced by:
stacking layers of a carbon fiber composite material that is produced by alternately stacking one or more layers of the matrix resin and one or more layers of the carbon fibers, followed by applying pressure at a temperature not lower than a melting point of the matrix resin; and
applying pressure to the stack at a temperature not lower than the melting point of the matrix resin.

13. The carbon fiber-reinforced composite material according to any one of claims 2 to 12,
wherein the sea-island structure includes 4000 or more islands (independent phase) per 10 µm².

14. The carbon fiber-reinforced composite material according to any one of claims 2 to 13,
wherein the sea-island structure comprises a sea (continuous phase) formed from a polyolefin resin, and an island (independent phase) formed from a monomer that contains an ethylenic double bond and a polar group in the same molecule, and an aromatic vinyl compound or a conjugated diene compound.

15. The carbon fiber-reinforced composite material according to any one of claims 1 to 14, which has an apparent interlaminar shear strength of 25 MPa or higher at 25°C based on ASTM-D2344.
